# EUROPEAN PATENT SPECIFICATION

(11) **EP 1 622 961 B1**
(45) Date of publication and mention of the grant of the patent: **05.09.2007**
(21) Application number: 04752165.3
(22) Date of filing: 12.05.2004
(51) Int. Cl.: C08G 18/67, C09D 175/16

(54) **POWDER COATING AGENTS AND USE THEREOF IN POWDER COATING PROCESSES**
PULVERBESCHICHTUNGSMITTEL UND DEREN VERWENDUNG IN PULVERBESCHICHTUNGSVERFAHREN
AGENTS DE REVETEMENT EN POUDRE ET UTILISATION DE CES AGENTS DANS DES PROCEDES DE REVETEMENT EN POUDRE

(30) Priority: 12.05.2003 US 470377 P
(43) Date of publication of application: 08.02.2006
(73) Proprietor: E.I. DUPONT DE NEMOURS AND COMPANY, Wilmington, Delaware 19898 (US)
(72) Inventor: WISSING, Klaus, 40627 Düsseldorf (DE); FLOSBACH, Carmen, 42287 Wuppertal (DE); FRESE, Peter, 80428 Landshut (DE); REIS, Oliver, 58456 Witten (DE)
(74) Representative: DuPont Performance Coatings Biering/Blum/Kimpel
(86) International application number: PCT/US2004/015070
(87) International publication number: WO 2004/101641

(56) References cited:
- EP-A- 0 702 067
- EP-A- 1 391 492
- DE-A- 19 939 738
- US-A- 5 677 379

## Description

### Field of the Invention

The invention relates to the use of powder coating agents in processes for powder coating substrates, in particular vehicles and vehicle parts, wherein curing of the applied powder coating proceeds with high-energy radiation and by means of moisture or, in areas inaccessible to the high-energy radiation, only by means of moisture.

### Description of Related Art

Various dual cure systems are known in coatings technology which combine curing by means of high-energy radiation, in particular by means of UV radiation, with moisture curing. Such systems generally comprise organopolysiloxane binders which contain both hydrolyzable silane groups and free-radically polymerizable, olefinically unsaturated groups.

WO 99/67318, for example, describes a binder system based on two differently functionalized polysiloxanes, wherein one polysiloxane comprises (meth)acryloyl groups and the second polysiloxane comprises ethylenically unsaturated groups and hydrolyzable silane groups. This binder system is used in potting applications and in coating agents for electronic components and electronic circuits.

JP 5311082 describes a radiation- and moisture-curing binder system which is produced by reacting a polyether comprising amino end groups or a polybutadiene/acrylonitrile copolymer with compounds which contain epoxy and alkoxysilane groups and further reacting the resultant reaction product with compounds which contain (meth)acryloyl groups and, for example, NCO groups. One-layer coatings are obtained which are tack-free after 24 hours and exhibit good tear strength and elongation.

US 5,523,443 discloses a UV-curable coating system with good electrical properties for electronic circuits, which system additionally cures by means of moisture. A urea oligomer with acryloyl groups and alkoxysilane groups is used, which oligomer is produced, for example, from a urea derivative, in particular the reaction product of a diisocyanate and an amine containing alkoxysilane groups and a (meth)acryloyl-functional diol.

Nothing is known from the prior art concerning powder coating agents that are curable (cross-linkable) both by means of UV radiation and by means of moisture and use thereof, for example, in the preparation of one-layer or multi-layer coatings especially in the preparation of multi-layer coatings of vehicles and parts thereof.

In particular, in vehicle and vehicle part coating, for example, automotive body or body parts coating, there is a requirement for coating processes using powder coating agents curable by UV irradiation, in particular powder coating agents for producing the outer layer of a multilayer coating. The coatings produced with the process should exhibit adequate hardness, scratch resistance and good chemical resistance; adequate cross-linking should also be achieved in shaded areas, i.e., areas that are not reached by the UV radiation. In particular, it should be possible to achieve adequate hardness, scratch resistance and good chemical resistance in shaded areas.

### Summary of the Invention

The invention relates to a process for the production of a multilayer coating on substrates, wherein the outer coating layer is applied from a powder coating agent which comprises a binder system with free-radically polymerizable olefinic double bonds and with hydrolyzable alkoxysilane groups, wherein the resin solids content of the powder coating agent exhibits an equivalent weight of olefinic double bonds of 200 to 2000, preferably of 300 to 1500, and a content of silicon bound in alkoxysilane groups of 1 to 10 wt-%, preferably of 1 to 7 wt-%, especially preferably of 2 to 6 wt-%.

### Detailed Description of the Embodiments

The resin solids of the powder coating agents comprise the binder system with free-radically polymerizable olefinic double bonds and with hydrolyzable alkoxysilane groups as well as optionally present reactive compounds incorporable into at least one of the two cross-linking chemistries of the binder system.

The binder system of the powder coating agents comprises one or more powder coating binders with free-radically polymerizable olefinic double bonds and with hydrolyzable alkoxysilane groups. The free-radically polymerizable olefinic double bonds and the hydrolyzable alkoxysilane groups may here in principle be present in the same binder and/or in separate binders, preferably in the same binder.

The term "powder coating binder" means an amorphous or crystalline binder which is solid at temperatures of below 30°C.

The powder coating binders may exhibit a glass transition temperature or glass transition temperature range measurable by means of DSC (differential scanning calorimetry) and/or a melting temperature or melting temperature range measurable by means of DSC.

The powder coating agents cure by means of two different cross-linking mechanisms (cross-linking chemistries). Cross-linking proceeds, on the one hand, by means of free-radical polymerization of olefinic double bonds and, on the other, by means of the hydrolysis and subsequent condensation of alkoxysilane groups to form siloxane bridges.

Suitable powder coating binders with free-radically polymerizable olefinic double bonds which may be considered are, for example, any powder coating binders known to the skilled person which can be cross-linked by free-radical polymerization. These powder coating binders are prepolymers, such as, polymers and oligomers, containing, per molecule, one or more, for example, on average 1 to 20, preferably 2 to 10, particularly preferably 2 to 6 free-radically polymerizable olefinic double bonds.

The polymerizable double bonds may, for example, be present in the form of (meth)acryloyl, vinyl, allyl, maleate and/or fumarate groups. (Meth)acryloyl groups are preferred.

Both here and below, (meth)acryloyl and (meth)acrylic are respectively intended to mean acryloyl and/or methacryloyl and acrylic and/or methacrylic.

Examples of powder coating binders curable by free-radical polymerization include (meth)acryloyl-functional (meth)acrylate copolymers, polyurethane (meth)acrylates, polyester (meth)acrylates, unsaturated polyesters, silicone (meth)acrylates, epoxy resin (meth)acrylates, amino resin (meth)acrylates and melamine resin (meth)acrylates. The number average molar mass Mn of these compounds may, for example, be from 500 to 10,000 g/mol, preferably from 500 to 5,000 g/mol. The powder coating binders may be used individually or in combination.

Powder coating binders which contain free-radically polymerizable double bonds in the form of the preferred (meth)acryloyl groups may be produced in accordance with conventional methods. This may proceed, for example, by: transesterifying OH-functional resins, such as OH-functional polyesters, (meth)acrylate copolymers, polyurethanes or epoxy resins, with alkyl esters of (meth)acrylic acid; esterifying the stated OH-functional resins with (meth)acrylic acid; reacting the stated OH-functional resins with isocyanate-functional (meth)acrylates; reacting acid-functional resins, such as polyesters, (meth)acrylate copolymers or polyurethanes with epoxy-functional (meth)acrylates; reacting epoxy-functional resins, such as polyesters, (meth)acrylate copolymers, epoxy resins with (meth)acrylic acid. These production methods stated, by way of example, are described in the literature and known to the person skilled in the art.

Powder coating binders with hydrolyzable alkoxysilane groups which may be considered are those conventional solid (amorphous or crystalline) binders known to the person skilled in the art which are functionalized or may be functionalized with alkoxysilane groups. The alkoxysilane groups may comprise monoalkoxysilane, dialkoxysilane and/or trialkoxysilane groups. Trialkoxysilane groups are preferred. The alkoxysilane groups comprise, for example, 1 to 10, preferably, 1 to 3 carbon atoms in the alkoxy residue.

The powder coating binders bearing alkoxysilane groups may be produced, for example, by: free-radically copolymerizing alkoxysilane-functional (meth)acrylate monomers or vinylalkoxysilanes; reacting OH-functional resins, such as, OH-functional polyesters, (meth)acrylate copolymers, polyurethanes or epoxy resins with isocyanate-functional alkoxysilanes; reacting epoxy-functional resins with aminoalkoxysilanes; reacting acid-functional resins with epoxy-functional alkoxysilanes; reacting isocyanate-functional resins (for example, polyurethanes, polyesterurethane prepolymers, (meth)acrylate copolymers, in each case with free NCO groups) with aminoalkoxysilanes; reacting isocyanate-functional resins with OH-functional alkoxysilanes produced in situ, for example, by addition of aminoalkoxysilanes onto cyclic carbonates, followed by reacting the obtained intermediate adducts with the isocyanate-functional resins. The particular reaction must be performed with exclusion of water in order to suppress premature hydrolysis of the alkoxysilane groups.

Powder coating binders bearing both olefinic double bonds, in particular (meth)acryloyl groups, and hydrolyzable alkoxysilane groups which may be considered are those conventional solid (amorphous or crystalline) binders known to the person skilled in the art which are functionalized or may be functionalized with (meth)acryloyl groups and alkoxysilane groups. These resins may, for example, be produced as follows: (meth)acryloyl groups are first incorporated into an appropriate resin, as described above. Residual OH groups may then be reacted with isocyanate-functional alkoxysilanes or residual epoxy groups may be reacted with aminoalkoxysilanes or some of the acryloyl groups may be reacted with aminoalkoxysilanes.

The equivalent ratio of free-radically polymerizable olefinic double bonds to hydrolyzable alkoxysilane groups (mono-, di- and trialkoxysilane groups are in each case calculated as one equivalent) in the binder system may be, for example, 1:0.1 to 1:5, preferably 1:0.2 to 1:4.

The powder coating binders with free-radically polymerizable olefinic double bonds and/or hydrolyzable alkoxysilane groups may additionally contain hydroxyl groups. The hydroxyl groups may be obtained or introduced using measures known to the person skilled in the art. For example, the hydroxyl groups may be introduced by reacting NCO groups still present in the binders with polyols. The powder coating binders may have hydroxyl numbers of, for example, 0 to 200 mg KOH/g. The additionally present hydroxyl groups can have a catalytic action on moisture curing and can also react with the alkoxysilane groups under a condensation reaction.

The powder coatings preferably contain polyurethane-based powder coating binders, in particular as the main or sole binder with a content of, for example, 50 to 100 wt.% relative to the binder system. Particularly, preferred polyurethane binders are those having olefinic double bonds and alkoxysilane groups in the same molecule, in particular those which contain one or more, for example on average 1 to 20, preferably 2 to 10, particularly preferably 2 to 6 free-radically polymerizable olefinic double bonds in the form of (meth)acryloyl groups per molecule and exhibit a number average molar mass Mn of, for example, 500 to 10000 g/mol, preferably of 500 to 5000 g/mol, an olefinic double bond equivalent weight of 200 to 2000, preferably of 300 to 1500 and a content of silicon bound in alkoxysilane groups of 1 to 10 wt.%, preferably of 1 to 7 wt.%, particularly preferably of 2 to 6 wt.%.

The polyurethane powder coating binders with free-radically polymerizable olefinic double bonds in the form of (meth)acryloyl groups and with hydrolyzable alkoxysilane groups may be produced by various methods. According to a first variant, (meth)acryloyl-functional polyurethanes are first produced, into which alkoxysilane groups are subsequently introduced. According to a second variant, polyurethanes containing alkoxysilane groups are first produced and (meth)acryloyl groups are then introduced into these polyurethanes. Both production variants will be described in greater detail below.

According to variant 1, (meth)acryloyl-functional polyurethanes are first produced using conventional methods. This may, for example, proceed by: transesterifying OH-functional polyurethanes with alkyl esters of (meth)acrylic acid; esterifying OH-functional polyurethane resins with (meth)acrylic acid; reacting OH-functional polyurethane resins with isocyanate-functional (meth)acrylates or reacting acid-functional polyurethanes with epoxy-functional (meth)acrylates.
The hydrolyzable alkoxysilane groups are then introduced. Functionalization of the polyurethane (meth)acrylates with hydrolyzable alkoxysilane groups may, for example, proceed by reacting residual OH groups in the polyurethane (meth)acrylate with isocyanate-functional alkoxysilanes or reacting residual epoxy groups with aminoalkoxysilanes or reacting some of the acryloyl groups with aminoalkoxysilanes.

For example, polyisocyanates may be reacted with hydroxyalkyl (meth)acrylates, the isocyanate groups being completely consumed, and the aminoalkoxysilanes may then be added to some of the double bonds by Michael addition. Some of the isocyanate groups of a polyisocyanate may also be reacted with hydroxyalkyl (meth)acrylates and the aminoalkoxysilane may then be added to the residual isocyanate groups.

According to the preferred variant 2, compounds comprising alkoxysilane groups are first produced and (meth)acryloyl groups are then introduced. This may, for example, proceed by reacting an alkyl (meth)acrylate with a primary aminoalkoxysilane by nucleophilic addition to yield the secondary aminoalkoxysilane and then performing a reaction with polyisocyanates to yield an NCO-functional prepolymer. The prepolymer containing NCO may then be reacted with hydroxyalkyl (meth)acrylates. Similarly, it is also possible in the first step to react a primary aminoalkoxysilane with a cyclic carbonate to yield the OH-functional alkoxysilane, which latter is then further reacted with polyisocyanate and hydroxyalkyl (meth)acrylates. It is also possible initially to react polyisocyanates with aminoalkoxysilanes and then further to react residual isocyanate groups with hydroxyalkyl (meth)acrylates.

The powder coating binders may be used in combination with solid or sufficiently small proportions of liquid reactive compounds incorporable into at least one of the two cross-linking chemistries of the binder system. These compounds comprise, for example, alkoxysilane compounds or in particular free-radically polymerizable, low molecular weight compounds in each case having molar masses of below 500 g/mol. The free-radically polymerizable low-molecular compounds may be mono-, di- or polyunsaturated. Examples of monounsaturated free-radically polymerizable low-molecular compounds are (meth)acrylic acid and the esters thereof, maleic acid and the semi-esters thereof, vinyl acetate, vinyl ethers, styrene, vinyltoluene. Examples of diunsaturated free-radically polymerizable low-molecular compounds are di(meth)acrylates, such as, 1,3-butanediol di(meth)acrylate, dipropylene glycol di(meth)acrylate, hexanediol di(meth)acrylate, vinyl (meth)acrylate, allyl (meth)acrylate, divinylbenzene. Examples of polyunsaturated free-radically polymerizable low-molecular compounds are glycerol tri(meth)acrylate, trimethylolpropane tri(meth)acrylate, pentaerythritol tri(meth)acrylate, pentaerythritol tetra(meth)acrylate.

Free-radical inhibitors may be added to the powder coating binders in order to prevent premature polymerization of the olefinic double bonds present. Examples of free-radical inhibitors are hydroquinone, 4-methoxyphenol, 2,6-di-tert.-butyl-4-methylphenol, phenothiazine, 3,5-di-tert.-butyl-4-hydroxyanisole, 2-tert.-butyl-4-hydroxyanisole, 3-tert.-butyl-4-hydroxyanisole, p-benzoquinone.

The powder coating agents may contain photoinitiators in order to initiate free-radical polymerization. Suitable photoinitiators include, for example, those which absorb in the wavelength range from 190 to 600 nm. Examples of photoinitiators for free-radically curing systems are benzoin and derivatives, acetophenone and derivatives, such as, for example, 2,2-diacetoxyacetophenone, benzophenone and derivatives, thioxanthone and derivatives, anthraquinone, 1-benzoylcyclohexanol, organophosphorus compounds, such as, for example, acyl phosphine oxides. The photoinitiators are used, for example, in quantities of 0.1 to 7 wt-%, preferably of 0.5 to 5 wt-%, relative to the total of resin solids and photoinitiators. The photoinitiators may be used individually or in combination.

The powder coating agents may contain catalysts to catalyze moisture curing. Examples of such catalysts are Lewis bases, for example, cycloaliphatic amines, organo tin compounds, such as, dibutyltin dilaurate, dibutyltin dioctoate and acid catalysts, such as, for example, p-toluenesulfonic acid, dodecylbenzenesulfonic acid, dinonylnaphthalenedi- or -monosulfonic acid. The catalysts may be blocked, for example, blocked p-toluenesulfonic acid, dodecylbenzenesulfonic acid, dinonylnaphthalenedisulfonic acid or dinonylnaphthalenemonosulfonic acid. The catalysts may be used individually or in combination with one another.

The powder coating agents may comprise pigmented or unpigmented powder coating. They comprise transparent powder clear coating agents, transparent powder sealing coating agents or pigmented powder top coating agents.

The powder coating agents may contain transparent, color-imparting and/or special effect-imparting pigments and/or extenders according to a pigment plus extender:resin solids weight ratio in the range of, for example, 0:1 to 2:1. Suitable color-imparting pigments are any conventional coating pigments of an organic or inorganic nature. Examples of inorganic or organic color-imparting pigments are titanium dioxide, micronized titanium dioxide, iron oxide pigments, carbon black, azo pigments, phthalocyanine pigments, quinacridone or pyrrolopyrrole pigments. Examples of special effect-imparting pigments are metal pigments, for example, made from aluminum, copper or other metals; interference pigments, such as, for example, metal oxide coated metal pigments and coated mica. Examples of usable extenders are silicon dioxide, aluminum silicate, barium sulfate, calcium carbonate and talcum.

In addition to the already stated photoinitiators, inhibitors and catalysts, the powder coating agents may contain further conventional powder coating additives, such as, for example, levelling agents, degassing agents, antioxidants and light stabilizers based on HALS (hindered amine light stabilizers) products and/or UV absorbers. The additives are used in conventional amounts known to the person skilled in the art.

The powder coating agents may be produced using the conventional methods known to the person skilled in the art, in particular, for example, by extruding the powder coating material, which has already been completely formulated by dry mixing of all the required components, in the form of a pasty melt, cooling the melt, performing coarse comminution, fine grinding and then classifying to the desired grain fineness, for example, to average particle sizes of 20 to 90 µm.

The invention relates to a process for coating substrates by application of a powder coating layer as the outer coating layer of a multilayer coating and curing the applied powder coating layer. The powder coating layer in question is produced from a powder coating agent, which comprises a binder system with free-radically polymerizable olefinic double bonds and with hydrolyzable alkoxysilane groups. The resin solids content of the powder coating agent exhibits an equivalent weight of olefinic double bonds of 200 to 2000, preferably of 300 to 1500 and a content of silicon bound in alkoxysilane groups of 1 to 10 wt.%, preferably of 1 to 7 wt.% particularly preferably of 2 to 6 wt.%. The curing of the powder coating layer proceeds by free-radical polymerization of the olefinic double bonds on irradiation with high-energy radiation and by siloxane bridge formation under the action of moisture. It is here clear to the person skilled in the art that, in the case of substrates with areas (for example shaded areas) inaccessible to the high-energy radiation, curing proceeds only by siloxane bridge formation under the action of moisture in precisely these areas.

The outer layer of the multilayer coating may comprise a powder clear coat layer applied onto a color-imparting and/or special effect-imparting base coat layer or a pigmented one-layer powder top coat layer applied onto a prior coating. It may also comprise a transparent powder sealing layer which is applied, for example, onto the outer coating layer of a multilayer coating, in particular onto a clear coat layer or a pigmented top coat layer, in order to achieve particular scratch resistance.

It has surprisingly been found that it is possible to produce coating layers, in particular clear coat, pigmented top coat or sealing layers, by means of the process according to the invention, which coating layers, in addition to adequate hardness, also exhibit elevated cross-linking and chemical resistance in shaded areas.

Preferred embodiments of the process according to the invention are thus (a) production of an outer clear coat layer of a clear powder coating on a pigmented base coat layer, (b) production of an outer pigmented top coat layer of a powder coating on a substrate already coated with one or more coating layers, for example with a primer and/or primer surfacer layer and (c) production of an outer transparent sealing layer of a clear powder coating on a substrate already coated with one or more coating layers, for example, with a primer and/or primer surfacer layer together with a base coat and clear coat layer.

Application of the powder coating agents may proceed using known methods and preferably by means of spraying.

Substrates which may be considered are in particular not only metal substrates but also thermally resistant plastics parts, for example, also fiber-reinforced plastics parts. Examples are vehicles and vehicle parts, in particular, automotive bodies and body parts, such as, for example, body fittings.

The method used to apply the powder coatings may be, for example, initially to apply the powder coating agent onto the particular substrate and to melt it by heating the applied powder coating to a temperature above the melting temperature, for example, in the range from 60 to 200°C. After melting under the action of heat, for example, by convective or radiant heating, and a phase optionally provided to allow levelling, irradiation with high-energy radiation may proceed for the purpose of free-radical polymerization of the olefinic double bonds.

UV (ultraviolet) radiation or electron beam radiation may be used as high-energy radiation. UV radiation is preferred. Irradiation may proceed continuously or discontinuously (in cycles).

Irradiation may be carried out, for example, in a belt unit fitted with one or more UV radiation emitters or with one or more UV radiation emitters positioned in front of the object to be irradiated, or the area to be irradiated, or the substrate to be irradiated and/or the UV radiation emitter(s) is(are) moved relative to one another during irradiation. For example, the subject to be irradiated may be moved through an irradiation tunnel fitted with one or more UV radiation emitters, and/or a robot equipped with one or more UV radiation emitters may guide the UV radiation emitter(s) over the substrate surface.

In principle, the duration of irradiation, distance from the object and/or radiation output of the UV radiation emitter may be varied during UV irradiation. The preferred source of radiation comprises UV radiation sources emitting in the wave length range from 180 to 420 nm, in particular, from 200 to 400 nm. Examples of such UV radiation sources are optionally doped high, medium and low pressure mercury vapour emitters and gas discharge tubes, such as, for example, low pressure xenon lamps. Apart from these continuously operating UV radiation sources, however, it is also possible to use discontinuous UV radiation sources. These are preferably so-called high-energy flash devices (UV flash lamps for short). The UV flash lamps may contain a plurality of flash tubes, for example, quartz tubes filled with inert gas, such as, xenon. The UV flash lamps have an illuminance of, for example, at least 10 megalux, preferably, from 10 to 80 megalux per flash discharge. The energy per flash discharge may be, for example, 1 to 10 kJoule.

The irradiation time with UV radiation when UV flash lamps are used as the UV radiation source may be, for example, in the range from 1 millisecond to 400 seconds, preferably, from 4 to 160 seconds, depending on the number of flash discharges selected. The flashes may be triggered, for example, about every 4 seconds. Curing may take place, for example, by means of 1 to 40 successive flash discharges.

If continuous UV radiation sources are used, the irradiation time may be, for example, in the range from a few seconds to about 5 minutes, preferably less than 5 minutes.

The distance between the UV radiation sources and the substrate surface to be irradiated may be, for example, 5 to 60 cm.

Irradiation with UV radiation may proceed in one or more successive irradiation steps. In other words, the energy to be applied by irradiation may be supplied completely in a single irradiation step or in portions in two or more irradiation steps.

Curing under the reaction of moisture is carried out by exposure to conditions of sufficient moisture, e.g., by exposure to humidity. The moisture curing reaction is operative over a broad range of humidity and can be carried out at a relative humidity in the range of, for example, 10 to 90%, and preferably, 20 to 80%.

In order to promote rapid development of satisfactory cross-linking, hardness, scratch resistance and chemical resistance in the shaded areas too, it is advantageous to expose the applied and melted powder coating layer to thermal energy before, during and/or after UV irradiation. The coating layer may, for example, be exposed by convective and/or radiant heating to temperatures of approx. 60°C to 200°C, preferably of 80°C to 160°C (object temperature in each case).

The process according to the invention may be performed, in particular, on an industrial scale, for example, in industrial or automotive original coating.

The following Example illustrates a dual-cure powder coating which cures thermally and on exposure to high-energy radiation.

### EXAMPLE

a) 170 pbw (parts by weight) of isophorone diisocyanate, 0.40 pbw of methylhydroquinone and 0.10 pbw of dibutyltin dilaurate were initially introduced into a 1 litre, three-necked flask fitted with a stirrer, thermometer and dropping funnel and heated to 65°C. At 65°C, 61 pbw of butylethylpropanediol were added in such a manner that the temperature did not exceed 80°C. The temperature was maintained at 80°C until an NCO value (weight percentage of NCO groups calculated as an MW of 42) of less than 13.9% was obtained. 88.5 pbw of hydroxyethyl acrylate were then added dropwise in such a manner that the temperature did not exceed 90°C. The temperature was maintained at 90°C for a further 3 h (hours) until the NCO value fell below 0.1% . 61.50 pbw of aminopropyltrimethoxysilane (Dynasilan® AMEO from Degussa) were then added dropwise in such a manner that the temperature did not exceed 100°C. On completion of addition, 76.5 pbw of isophorone diisocyanate were added dropwise in such a manner that the temperature did not exceed 100°C. On completion of addition, the reaction mixture was heated to 120°C and maintained at this temperature until an NCO value of less than 3.2% was obtained. At 120°C, 31 pbw of hydroxyethyl acrylate and then 11 pbw of butanediol monoacrylate were added dropwise in such a manner that the reaction temperature did not rise above 125°C. Once an NCO value of less than 0.1% had been obtained, the reaction mixture was poured into a flat aluminium dish and broken up once it had solidified.
   The resultant brittle resin had a number average molecular weight Mn of 1700, a weight average Mw of 3800 and a glass transition determined by means of DSC of 29-41°C.
b) A comminuted mixture of the following components was premixed and extruded:
   92.5 pbw of the binder from above Example a)
   1.0 pbw of Irgacure® 2959 (photoinitiator from Ciba)
   2.0 pbw of Powdermate 486 CFL (levelling additive from Troy Chemical Company)
   1.5 pbw of Tinuvin® 144 (HALS light stabilizer from Ciba)
   1.5 pbw of Tinuvin® CGL 1545 (UV absorber from Ciba)
   1.5 pbw of p-toluenesulfonic acid blocked with diisopropylamine.

   A powder clear coating agent was produced after cooling, crushing and sieving of the comminuted mixture.
c) The powder clear coating agent from above Example b) was sprayed to a layer thickness of 80 µm onto steel panels coated with conventional electrodeposition primer, primer surfacer and base coat (flashed off) and, once melted, was baked for 20 minutes at 140°C (object temperature) at a relative atmospheric humidity of 55%.
d) Immediately after removal from the baking oven, some of the powder-coated and baked test panels from above Example c) were subjected to additional curing by UV irradiation (medium pressure mercury emitter from Fusion, 240 W/cm, 100% power output, at a UV radiation emitter/object distance of 16 cm, at a belt speed of 3 m/min; corresponding to a radiation intensity of 500 mW/cm² and a radiation dose of 1500 mJ/cm²).

The following Table shows the technical properties of the resultant coatings.

**Test methods:**

| | Thermal only | Thermal + UV |
|---|---|---|
| Amtec scratch resistance | 50 | 85 |
| Xylene test | OK | OK |
| Acid test | 15 | 25 |

Amtec scratch resistance, stated as residual gloss after reflow in %: Residual gloss was measured in % (ratio of initial gloss of the clear coat surface to its gloss after wash scratching, gloss measurement in each case being performed at an angle of illumination of 20°). Wash-scratching was performed using an Amtec Kistler laboratory car wash system (c.f. Th. Klimmasch and Th. Engbert, Entwicklung einer einheitlichen Laborprüfmethode für die Beurteilung der Waschstraßenbeständigkeit von Automobil-Decklacken [development of a standard laboratory test method for evaluating resistance of automotive top coats to car wash systems], in DFO proceedings 32, pages 59 to 66, technology seminars, proceedings of the seminar on 29-30.4.97 in Cologne, published by Deutsche Forschungsgesellschaft für Oberflächenbehandlung e.V., Adersstraße 94, 40215 Düsseldorf).

### Xylene test:

Brief description: A xylene-soaked filter paper is placed on the coating film and covered by a watch-glass for 10 minutes. Evaluation: OK = no visible change

### Acid test:

Brief description: at 65°C, 50 µl drops of 36% sulfuric acid are placed at 1 minute intervals for 30 minutes onto the coating film.
Evaluation: Destruction of the film after x (0-30) minutes.

## Claims

1. A process for the production of a multilayer coating on substrates, wherein the outer coating layer is applied from a powder coating agent comprising a resin solids content, wherein the resin solids content comprises an equivalent weight of olefinic double bonds of 200 to 2000 and a content of silicon bound in alkoxysilane groups of 1 to 10 wt.% and wherein curing of the outer powder coating layer proceeds by free-radical polymerization of the olefinic double bonds on irradiation with high-energy radiation and by siloxane bridge formation under the action of moisture.

2. The process of claim 1, wherein the resin solids content comprises an equivalent weight of olefinic double bonds of 300 to 1500, and a content of silicon bound in alkoxysilane groups of 1 to 7 wt.%.

3. The process of claim 1 or 2, wherein the alkoxysilane groups comprise trialkoxysilane groups.

4. The process of claim 1, 2 or 3, wherein the resin solids content comprises at least one binder with olefinic double bonds and alkoxysilane groups in the same binder.

5. The process of any one of the preceding claims, wherein the resin solids content comprises a binder system that consists of 50 to 100 wt.% of polyurethane-based powder coating binders.

6. The process of any one of the preceding claims, wherein UV radiation is used as the high-energy radiation.

7. The process of any one of the preceding claims, wherein the substrates comprise substrates selected from the group consisting of automotive bodies and automotive body parts.

## Patentansprüche

1. Verfahren für die Herstellung einer mehrlagigen Beschichtung auf Substraten, wobei die äußere Lage der Beschichtung von einem Mittel für Pulverlackierung aufgetragen wird, das einen Gehalt an Harzfeststoffen aufweist und worin der Gehalt an Harzfeststoffen eine Äquivalentmasse von olefinischen Doppelbindungen von 200 bis 2.000 umfasst und einen Gehalt an Silicium-Bindung in Alkoxysilan-Gruppen von 1 Gew.% bis 10 Gew.% und worin das Härten der äußeren Lage des Pulverlackes über eine Radikalkettenpolymerisation der olefinischen Doppelbindungen bei Bestrahlung mit energiereicher Strahlung und durch Siloxan-Brückenbildung unter der Wirkung von Feuchtigkeit erfolgt.

2. Verfahren nach Anspruch 1, wobei der Gehalt an Harzfeststoffen eine Äquivalentmasse von olefinischen Doppelbindungen von 300 bis 1.500 und einen Gehalt an Silicium-Bindung in Alkoxysilan-Gruppen von 1 Gew.% bis 7 Gew.% umfasst.

3. Verfahren nach Anspruch 1 oder 2, wobei die Alkoxysilan-Gruppen Trialkoxysilan-Gruppen aufweisen.

4. Verfahren nach Anspruch 1, 2 oder 3, wobei der Gehalt an Harzfeststoffen mindestens ein Bindemittel mit olefinischen Doppelbindungen und Alkoxysilan-Gruppen des gleichen Bindemittels umfasst.

5. Verfahren nach einem der vorgenannten Ansprüche, wobei der Gehalt an Harzfeststoffen ein Bindemittelsystem umfasst, das aus 50 Gew.% bis 100 Gew.% Pulverlackbindemitteln auf Basis von Polyurethan besteht.

6. Verfahren nach einem der vorgenannten Ansprüche, wobei als die energiereiche Strahlung UV-Strahlung angewendet wird.

7. Verfahren nach einem der vorgenannten Ansprüche, wobei die Substrate Substrate umfassen, die ausgewählt sind aus der Gruppe, bestehend aus Autokarosserien und Autokarosserie-Bauteilen.

## Revendications

1. Procédé pour la production d'un revêtement multicouche sur des substrats, dans lequel la couche de revêtement externe est appliquée à partir d'un agent de revêtement en poudre comprenant une teneur en solides de résine, dans lequel la teneur en solides de résine comprend un poids équivalent de liaisons doubles oléfiniques de 200 à 2000 et une teneur en silicium lié dans des groupes alkoxysilanes de 1 à 10% en poids et dans lequel le durcissement de la couche de revêtement en poudre externe se déroule par une polymérisation par radicaux libres des liaisons doubles oléfiniques lors d'une irradiation avec un rayonnement à haute énergie et par la formation de ponts de siloxane sous l'action d'humidité.

2. Procédé suivant la revendication 1, dans lequel la teneur en solides de résine comprend un poids équivalent de liaisons doubles oléfiniques de 300 à 1500 et une teneur en silicium lié dans des groupes alkoxysilanes de 1 à 7% en poids.

3. Procédé suivant la revendication 1 ou 2, dans lequel les groupes alkoxysilanes comprennent des groupes trialkoxysilanes.

4. Procédé suivant la revendication 1, 2 ou 3, dans lequel la teneur en solides de résine comprend au moins un liant avec des liaisons doubles oléfiniques et des groupes alkoxysilanes dans le même liant.

5. Procédé suivant l'une quelconque des revendications précédentes, dans lequel la teneur en solides de résine comprend un système de liant qui est constitué de 50 à 100% en poids de liants de revêtement en poudre à base de polyuréthane.

6. Procédé suivant l'une quelconque des revendications précédentes, dans lequel un rayonnement UV est utilisé en tant que rayonnement à haute énergie.

7. Procédé suivant l'une quelconque des revendications précédentes, dans lequel les substrats comprennent des substrats choisis dans le groupe constitué de carrosseries automobiles et de pièces de carrosseries automobiles.
